# EUROPÄISCHE PATENTSCHRIFT

(11) **EP 4 194 174 B1**
(45) Veröffentlichungstag und Bekanntmachung des Hinweises auf die Patenterteilung: **09.10.2024**
(21) Anmeldenummer: 22205207.8
(22) Anmeldetag: 03.11.2022
(51) Int. Cl.: B29C 49/42, B29C 49/04, B29C 49/22, B29L 9/00, B29L 31/00, B65D 25/16, B65D 77/04, B65D 77/06, B65D 83/00, B65D 83/60, B67D 1/04, B05B 11/00

(54) **VORRICHTUNG ZUM ABLÖSEN ZUSAMMENFALTBARER INNENBEUTEL VON DEN INNENWÄNDEN STARRER AUSSENBEHÄLTER**
DEVICE FOR REMOVING FOLDABLE INNER BAGS FROM THE INNER WALLS OF RIGID OUTER CONTAINERS
DISPOSITIF POUR DÉTACHER LES SACS INTERNES PLIABLES DES PAROIS INTÉRIEURES DE RÉCIPIENTS EXTÉRIEURS RIGIDES

(30) Priorität: 08.12.2021 DE 102021132329
(43) Veröffentlichungstag der Anmeldung: 14.06.2023
(73) Patentinhaber: Gaplast GmbH, 82442 Altenau (DE)
(72) Erfinder: Kneer, Stephan, 82490 Farchant (DE); Yilginc, Kasim, 82487 Oberammergau (DE)
(74) Vertreter: Flosdorff, Jürgen

(56) Entgegenhaltungen:
- DE-A1- 102006 012 487
- JP-B2- 2 790 187
- US-A1- 2017 313 462

## Beschreibung

Die Erfindung betrifft eine Vorrichtung zum Ablösen zusammenfaltbarer Innenbeutel von den Innenwänden zugehöriger starrer Außenbehälter von Behältern, die im Coextrusionsverfahren hergestellt sind, wobei die Innenbeutel eine beträchtliche Steifigkeit und eine raue Oberfläche mit mikroskopisch kleinen Erhebungen und Vertiefungen aufweisen und deshalb mit nur geringen Adhäsionskräften an den Außenbehältern anhaften, ohne mit diesen verschweißt zu sein, und wobei die Außenbehälter eine wenigstens teilweise geöffnete Quetschnaht am Boden haben, in der eine verschweißte Bodennaht der Innenbeutel gehalten ist.

Die Innenbeutel und die Außenbehälter von Behältern der betrachteten Art gehen zwar keine Schweißverbindung miteinander ein, sie haften aber aneinander, wenn sie im Extrusionsverfahren herstellt werden. Bevor ein derartiger Behälter verwendungsfähig ist, d.h. mit einem flüssigen oder beispielsweise pastösem Behälterinhalt gefüllt wird, der dann mittels einer Airlesspumpe oder durch Zusammendrücken des Behälters allmählich abgegeben wird, muss der Innenbeutel von der Wand des Außenbehälters abgelöst und dann wieder an diese angelegt werden. Hierzu ist eine Vorrichtung bekannt, die durch die Behälteröffnung einen Unterdruck auf den Innenbeutel aufbringt, der sich daraufhin schlagartig zusammenzieht. Anschließend führt die Vorrichtung wieder Druckluft in den Innenbeutel ein, um diesen wieder an den Außenbehälter anzulegen, damit er vollständig mit Behälterinhalt befüllt werden kann. Wenn der Innenbeutel nicht gleichmäßig von der Wand des Außenbehälters abgelöst wird, tritt trotz Druckausgleichsöffnungen in der Wand des Außenbehälters in dem Innenbeutel bei Abgabe von Füllmaterial ein verhältnismäßig großer Unterdruck auf, wodurch die Funktionsfähigkeit einer meist vorgesehenen Pumpe beeinträchtigt werden kann.

Die JP 2 790 187 B2 offenbart eine Vorrichtung mit einer Förderbahn für aufrecht stehende Behälter, die durch ein horizontales umlaufendes Förderband gebildet ist, bei der an einer Seite des horizontalen Förderbandes ein vertikales, in gleicher Richtung umlaufendes Förderband angeordnet ist und an der gegenüberliegenden Seite ein vertikales feststehendes Band vorgesehen ist. Um die Flaschen um ihre Längsachse zu drehen, schlägt die Druckschrift vor, das vertikale Förderband in einer höheren oder niedrigeren Geschwindigkeit als die vorrückenden Behälter anzutreiben.

In der DE 10 2006 012 487 A1 ist eine verbesserte Ablösevorrichtung offenbart, die den Außenbehälter durchbohrt und anschließend ein Druckmedium in den Zwischenraum zwischen dem Außenbehälter und dem Innenbeutel einführt, nachdem die Vorrichtung die Behälteröffnung abgedichtet hat, wobei das Einführen des Druckmediums in den Zwischenraum gestoppt wird, wenn in dem Innenbeutel ein vorbestimmter Druckschwellwert erreicht ist, und wobei nach Druckentlastung durch die Vorrichtung ein Druckmedium in den Innenbeutel eingeführt wird, um diesen wieder an die Behälterwand anzulegen.

Diese Vorrichtung zum Ablösen des Innenbeutels von der Innenwand des Außenbehälters hat einen aufwendigen Aufbau, und das zugehörige Verfahren erhöht beträchtlich die Herstellungszeit gebrauchsfähiger Behälter der betrachteten Art.

Eine weitere Ablösevorrichtung wird in US2017313462A1 vorgeschlagen.

Der vorliegenden Erfindung liegt die Aufgabe zugrunde, ein Verfahren und eine einfach aufgebaute Vorrichtung zum Ablösen zusammenfaltbarer Innenbeutel von den Innenwänden zugehöriger starrer Außenbehälter anzugeben, mit der das Verfahren sehr viel schneller ausführbar ist.

Diese Aufgabe wird erfindungsgemäß durch die Merkmale der unabhängigen Ansprüchen gelöst.

Vorteilhafte Ausgestaltungen der Erfindung sind in den Unteransprüchen gekennzeichnet.

Die erfindungsgemäße Vorrichtung enthält eine Förderbahn für aufrecht stehende Behälter, die durch ein horizontales, umlaufendes Förderband gebildet ist, wobei die Förderbahn durch ein an einer Seite des horizontalen Förderbandes angeordnetes vertikales ,in derselben Richtung umlaufendes Förderband und an der gegenüberliegenden Seite durch ein vertikales, feststehendes Band begrenzt ist, wobei der Abstand zwischen dem vertikalen Förderband und dem feststehenden Band etwas kleiner als der Außendurchmesser der Behälter ist, so dass sich die Behälter beim Durchlauf zwischen dem vertikalen, umlaufenden Förderband und dem feststehenden vertikalen Band um ihre vertikale Achse drehen und dabei seitlich zusammengedrückt werden, wodurch sich die Innenbeutel schlagartig von den Außenbehältern ablösen. Dabei erfolgt der Druckausgleich in dem Zwischenraum zwischen dem Innenbeutel und dem Außenbehälter durch die teilweise geöffnete Quetschnaht am Boden der Außenbehälter. Die Innenbeutel legen sich aufgrund ihrer Elastizität selbststätig wieder an die Außenbehälter an, ohne dass danach erneut Adhäsionskräfte auftreten.

Die erfindungsgemäße Vorrichtung hat einen einfachen Aufbau und das erfindungsgemäße Verfahren arbeitet mit sehr kurzen Taktzeiten.

Mit Vorteil wird vorgeschlagen, dass der Abstand zwischen dem vertikalen umlaufenden Förderband und dem vertikalen feststehenden Band einstellbar ist, wobei zweckmäßigerweise die Lage des feststehenden Bandes verstellbar ist. Bevorzugt ist auch die Höhe der beiden Bänder verstellbar.

Nach einem weiteren Vorschlag der Erfindung ist das vertikale Förderband mit einer eigenen Antriebseinrichtung versehen.

Die beiden Förderbänder bestehen zweckmäßigerweise aus Stoff oder aus Gummi, während das feststehende vertikale Band aus einer Aluminiumlegierung oder aus Stahl bestehen kann. Dabei herrschen zwischen den beiden Förderbändern und den durchlaufenden Behältern höhere Reibungskräfte als mit dem feststehenden vertikalen Band, so dass die Behälter gleichmäßig mit der Fördergeschwindigkeit des horizontalen umlaufenden Förderbandes transportiert und an dem umlaufenden vertikalen Förderband um ihre Längsachse gedreht werden.

Dabei sind die Abmessungen der Förderbänder und deren Laufgeschwindigkeit so eingestellt, dass die Behälter sich an dem vertikalen umlaufenden Förderband bis zum Austritt aus den Förderbändern wenigstens einmal um 360° drehen. Dabei werden die Innenbeutel an ihrem gesamten Umfang von den Innenwänden der starren Außenbehälter abgelöst.

Das horizontale Förderband ist bevorzugt dicht bei der Blasform der Coextrusionsmaschine angeordnet, wo ein Greifer die jeweils geblasenen Behälter aus der Blasform entnimmt und auf das horizontale Förderband stellt. Die erfindungsgemäße Vorrichtung ist damit Bestandteil einer Coextrusionsblasanlage. Die fertigen Behälter werden am Ende des horizontalen Förderbandes in einem Sammelbehälter aufgenommen.

Die Innenbeutel der im Coextrusionsverfahren hergestellten Behälter können aus wenigstens zwei Schichten bestehen, wobei die den Außenbehältern zugewandte Schicht aus einem Gemisch von EVOH und einem Kunststoff mit elastischen Eigenschaften besteht. Dadurch erhalten die Innenbeutel eine beträchtliche Steifigkeit, obwohl sie bei der Abgabe von Behälterinhalt vollständig zusammenfaltbar sind, was auf den Kunststoffbestandteil mit elastischen Eigenschaften zurück zu führen ist. Für das elastische Material wird Surlyn vorgeschlagen, das in der dispersen Phase in dem EVOH vorliegt. Für die Außenschicht des Innenbeutels wird beispielsweise 85 EVOH 15 SY vorgeschlagen. Als produktberührende Innenschicht ist beispielsweise Surlyn geeignet.

Weitere Einzelheiten der Erfindung ergeben sich aus der nachfolgenden Beschreibung einer bevorzugten Ausführungsform der Vorrichtung sowie anhand der Zeichnungen. Dabei zeigen:
- Figur 1: eine Seitenansicht einer Ausführungsform der erfindungsgemäßen Vorrichtung;
- Figur 2: eine Aufsicht auf die Vorrichtung der Figur 1;
- Figur 3: eine Stirnansicht der Vorrichtung.

Die in den Figuren allgemein mit dem Bezugszeichen 1 versehene Vorrichtung enthält ein horizontales umlaufendes Förderband 2, das in der Nähe einer nicht dargestellten Blasform einer Coextrusions-Blasmaschine angeordnet ist. An einer Längsseite des horizontalen Laufbandes 2 ist oberhalb von dessen oberem Strang 3 ein vertikales umlaufendes Förderband, im folgenden Klemmförderband 4 genannt, angeordnet. Der innere Strang 5 des Klemmförderbandes 4 läuft mit derselben Geschwindigkeit ab wie der obere Strang 3 des horizontalen Förderbandes 2. Die Laufrichtung des horizontalen Förderbandes ist in den Figuren mit X bezeichnet, während die gleichsinnige Laufrichtung des inneren Strangs 5 des Klemmförderbandes 4 mit Y gekennzeichnet ist.

Über der gegenüber liegenden Längsseite des oberen Strangs 3 des horizontalen Laufbandes 2 ist als Gegenhalter ein feststehendes vertikales Band 6 angeordnet, das aus einem glatten Material wie Aluminiumlegierung oder Stahl besteht. Die beiden umlaufenden Förderbänder 2 und 4 bestehen aus Stoff oder aus einer Gummilegierung.

Der innere Strang 5 des Klemmförderbandes 4 verläuft parallel zu dem inneren Strang 7 des feststehenden Bandes 6, wobei der Abstand a voneinander etwas kleiner ist als der Außendurchmesser der zu handhabenden Behälter 8. Beim Durchlauf zwischen dem Klemmförderband 4 und dem feststehendem Band 6 drehen sich die Behälter 8 in Richtung der Pfeile b zumindest einmal im vollen Umfang um ihre vertikale Achse, wodurch sich die Innenbeutel der Behälter 8 schlagartig von den Außenbehältern lösen, was auch akustisch wahrnehmbar ist.

Die gesamte Vorrichtung 1 ist auf einem Gestell 9 befestigt, zu dessen konstruktiven Einzelheiten auf die Figuren hingewiesen wird. Das Klemmförderband 4 ist mit einem eigenen Motor 10 versehen, der das Klemmförderband 4 mit derselben Laufgeschwindigkeit antreibt, mit der das horizontale Förderband umläuft.

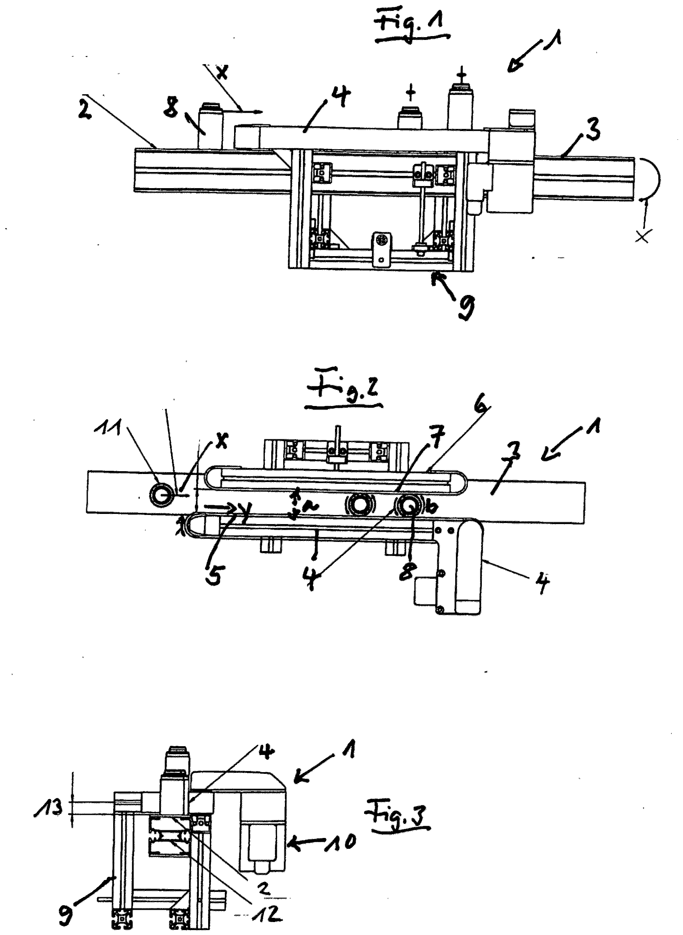

Die Teilezuführung ist in Figur 2 mit dem Bezugszeichen 11 versehen, während das Führungsprofil des Förderbandes in Figur 3 das Bezugszeichen 12 hat. 13 bezeichnet die einstellbare Höhe in Figur 3.

## Patentansprüche

1. Verfahren zum Ablösen zusammenfaltbarer Innenbeutel von den Innenwänden zugehöriger starrer Außenbehälter von Behältern, die im Coextrusionsverfahren hergestellt sind,
wobei die Innenbeutel eine beträchtliche Steifigkeit und eine raue Oberfläche mit mikroskopisch kleinen Erhebungen und Vertiefungen aufweisen und deshalb mit nur geringen Adhäsionskräften an den Außenbehältern anhaften, ohne mit diesen verschweißt zu sein und
wobei die Außenbehälter eine wenigstens teilweise geöffnete Quetschnaht am Boden haben, in der eine verschweißte Bodennaht der Innenbeutel gehalten ist,
wobei eine Vorrichtung (1) eingesetzt wird, die eine Förderbahn für aufrecht stehende Behälter (8), die durch ein horizontales umlaufendes Förderband (2) gebildet ist, ein an einer Seite des horizontalen Förderbandes (2) angeordnetes vertikales, in gleicher Richtung umlaufendes Förderband (4) und an der gegenüberliegenden Seite ein vertikales feststehendes Band (6) aufweist, **dadurch gekennzeichnet,**
**dass** der Abstand (a) zwischen dem vertikalen Förderband (4) und dem feststehenden Band (6) etwas kleiner als der Außendurchmesser der Behälter (8) ist,
so dass sich die Behälter (8) beim Durchlauf zwischen dem umlaufenden vertikalen Förderband (4) und dem feststehenden vertikalen Band (6) um ihre vertikale Achse drehen und dabei seitlich zusammengedrückt werden und sich die Innenbeutel schlagartig von den Außenbehältern ablösen.

2. Verfahren nach Anspruch 1,
**dadurch gekennzeichnet,**
**dass** der Abstand (a) zwischen dem vertikalen umlaufenden Förderband (4) und dem vertikalen feststehenden Band (6) einstellbar ist.

3. Verfahren nach Anspruch 1 oder 2,
**dadurch gekennzeichnet,**
**dass** das vertikale Förderband (4) mit derselben Geschwindigkeit ablauft wie das horizontale Förderband (2).

4. Verfahren nach einem der Ansprüche 1 bis 3,
**dadurch gekennzeichnet,**
**dass** für das vertikale umlaufende Förderband (4) eine eigene Antriebseinrichtung (10) vorgesehen ist.

5. Verfahren nach einem der Ansprüche 1 bis 4,
**dadurch gekennzeichnet,**
**dass** beide Förderbänder (2, 4) aus Stoff oder aus Gummi bestehen.

6. Verfahren nach einem der Ansprüche 1 bis 5,
**dadurch gekennzeichnet,**
**dass** das feststehende vertikale Band (6) aus einer Aluminiumlegierung oder aus Stahl besteht.

7. Verfahren nach einem der Ansprüche 1 bis 6,
**dadurch gekennzeichnet,**
**dass** die Förderbänder (2, 4) mit einer solchen Geschwindigkeit laufen, dass sich die Behälter (8) an dem vertikalen Förderband (4) wenigstens einmal um 360° drehen.

8. Vorrichtung zum Ablösen zusammenfaltbarer Innenbeutel von
den Innenwänden zugehöriger starrer Außenbehälter von Behältern, die im Coextrusionsverfahren hergestellt sind, wobei die Innenbeutel eine beträchtliche Steifigkeit und eine raue Oberfläche mit mikroskopisch kleinen Erhebungen und Vertiefungen aufweisen und deshalb mit nur geringen Adhäsionskräften an den Außenbehältern anhaften, ohne mit diesen verschweißt zu sein und wobei die Außenbehälter eine wenigstens teilweise geöffnete Quetschnaht am Boden haben, in der eine verschweißte Bodennaht der Innenbeutel gehalten ist, wobei die Vorrichtung (1) eine Förderbahn für aufrecht stehende Behälter (8), die durch ein horizontales umlaufendes Förderband (2) gebildet ist, ein an einer Seite des horizontalen Förderbandes (2) angeordnetes vertikales, in gleicher Richtung umlaufendes Förderband (4) und an der gegenüberliegenden Seite ein vertikales feststehendes Band (6) aufweist, H
**dadurch gekennzeichnet, dass**
der Abstand (a) zwischen dem vertikalen umlaufenden Förderband (4) und dem vertikalen feststehenden Band (6) einstellbar ist, so dass der Abstand (a) zwischen dem vertikalen Förderband (4) und dem feststehenden Band (6) etwas kleiner als der Außendurchmesser der Behälter (8) ist, so dass sich die Behälter (8) beim Durchlauf zwischen dem umlaufenden vertikalen Förderband (4) und dem feststehenden vertikalen Band (6) um ihre vertikale Achse drehen und dabei seitlich zusammengedrückt werden und sich die Innenbeutel schlagartig von den Außenbehältern ablösen.

## Claims

1. Method for detaching foldable inner bags from the inner walls of associated rigid outer containers of containers that have been produced in a co-extrusion process,
wherein the inner bags have a significant rigidity and a rough surface with microscopically small protuberances and depressions and therefore adhere to the outer containers with only very low adhesion forces, without being welded thereto, and
wherein the outer containers have at their base an at least partly open pinch seam in which a welded base seam of the inner bags is held,
wherein a device (1) is used which has a conveyor track for upright containers (8), which conveyor track is formed by a horizontal circulating conveyor belt (2), a vertical conveyor belt (4) which is arranged on one side of the horizontal conveyor belt (2) and circulates in the same direction, and a vertical stationary belt (6) on the opposite side,
**characterised in that** the distance (a) between the vertical conveyor belt (4) and the stationary belt (6) is slightly smaller than the external diameter of the containers (8),
so that the containers (8), on passing between the circulating vertical conveyor belt (4) and the stationary vertical belt (6), rotate about their vertical axis and in so doing are compressed laterally and the inner bags are abruptly detached from the outer containers.

2. Method according to claim 1,
**characterised in that**
the distance (a) between the vertical circulating conveyor belt (4) and the vertical stationary belt (6) is adjustable.

3. Method according to claim 1 or 2,
**characterised in that**
the vertical conveyor belt (4) runs at the same speed as the horizontal conveyor belt (2).

4. Method according to any one of claims 1 to 3,
**characterised in that**
the vertical circulating conveyor belt (4) is provided with its own drive device (10).

5. Method according to any one of claims 1 to 4,
**characterised in that**
both conveyor belts (2, 4) are made from fabric or from rubber.

6. Method according to any one of claims 1 to 5,
**characterised in that**
the stationary vertical belt (6) is made from an aluminium alloy or from steel.

7. Method according to any one of claims 1 to 6,
**characterised in that**
the conveyor belts (2, 4) run at a speed such that the containers (8) rotate at least once through 360° against the vertical conveyor belt (4).

8. Device for detaching foldable inner bags from the inner walls of associated rigid outer containers of containers that have been produced in a co-extrusion process, wherein the inner bags have a significant rigidity and a rough surface with microscopically small protuberances and depressions and therefore adhere to the outer containers with only very low adhesion forces, without being welded thereto, and wherein the outer containers have at their base an at least partly open pinch seam in which a welded base seam of the inner bags is held, wherein the device (1) has a conveyor track for upright containers (8), which conveyor track is formed by a horizontal circulating conveyor belt (2), a vertical conveyor belt (4) which is arranged on one side of the horizontal conveyor belt (2) and circulates in the same direction, and a vertical stationary belt (6) on the opposite side,
**characterised in that**
the distance (a) between the vertical circulating conveyor belt (4) and the vertical stationary belt (6) is adjustable so that the distance (a) between the vertical conveyor belt (4) and the stationary belt (6) is slightly smaller than the external diameter of the containers (8), so that the containers (8), on passing between the circulating vertical conveyor belt (4) and the stationary vertical belt (6), rotate about their vertical axis and in so doing are compressed laterally and the inner bags are abruptly detached from the outer containers.

## Revendications

1. Procédé de détachement de sacs internes repliables des parois intérieures de récipients extérieurs rigides afférents de récipients qui sont fabriqués dans un procédé par coextrusion,
dans lequel les sacs internes présentent une rigidité considérable et une surface brute avec des élévations et cavités microscopiques et donc collent avec seulement de faibles forces d'adhésion aux récipients extérieurs sans être soudés à ceux-ci et
dans lequel les récipients extérieurs présentent un cordon d'écrasement ouvert au moins partiellement sur le fond, dans lequel un cordon de fond soudé des sacs internes est maintenu,
dans lequel un dispositif (1) est inséré, lequel présente une bande de transport pour des récipients (8) verticaux qui est formée par une bande de transport (2) tournante horizontale, une bande de transport (4) tournante dans le même sens, verticale agencée au niveau d'un côté de la bande de transport (2) horizontale et sur le côté opposé une bande fixe verticale (6), **caractérisé en ce**
**que** la distance (a) entre la bande de transport (4) verticale et la bande (6) fixe est légèrement plus petite que le diamètre extérieur des récipients (8),
de sorte que les récipients (8) se tournent lors du passage entre la bande de transport (4) verticale tournante et la bande verticale (6) fixe autour de leur axe vertical et soient comprimés latéralement et les sacs internes se détachent brusquement des récipients extérieurs.

2. Procédé selon la revendication 1,
**caractérisé en ce**
**que** la distance (a) entre la bande de transport (4) tournante verticale et la bande (6) fixe verticale est réglable.

3. Procédé selon la revendication 1 ou 2,
**caractérisé en ce que**
la bande de transport (4) verticale se déroule à la même vitesse que la bande de transport (2) horizontale.

4. Procédé selon l'une quelconque des revendications 1 à 3,
**caractérisé en ce que**
un propre dispositif d'entraînement (10) est prévu pour la bande de transport (4) tournante verticale.

5. Procédé selon l'une quelconque des revendications 1 à 4,
**caractérisé en ce que**
les deux bandes de transport (2, 4) se composent de tissu ou de caoutchouc.

6. Procédé selon l'une quelconque des revendications 1 à 5,
**caractérisé en ce que**
la bande (6) verticale fixe se compose d'un alliage d'aluminium ou d'acier.

7. Procédé selon l'une quelconque des revendications 1 à 6,
**caractérisé en ce**
**que** les bandes de transport (2, 4) tournent à une telle vitesse que les récipients (8) se tournent au niveau de la bande de transport (4) verticale au moins une fois de 360°.

8. Dispositif de détachement de sacs internes repliables des parois intérieures de récipients extérieurs rigides afférents de récipients qui sont fabriqués dans un procédé par coextrusion, dans lequel les sacs internes présentent une rigidité considérable et une surface brute avec des élévations et cavités microscopiques et donc collent avec seulement de faibles forces d'adhésion aux récipients extérieurs, sans être soudés à ceux-ci et dans lequel les récipients extérieurs présentent un cordon d'écrasement ouvert au moins partiellement sur le fond, dans lequel un cordon de fond soudé des sacs internes est maintenu, dans lequel le dispositif (1) présente une bande de transport pour des récipients (8) verticaux qui est formée par une bande de transport (2) tournante horizontale, une bande de transport (4) tournante dans le même sens, verticale agencée au niveau d'un côté de la bande de transport (2) horizontale et sur le côté opposé une bande fixe verticale (6),
**caractérisé en ce**
**que** la distance (a) entre la bande de transport (4) tournante verticale et la bande (6) fixe verticale est réglable de sorte que la distance (a) entre la bande de transport (4) verticale et la bande (6) fixe soit légèrement plus petite que le diamètre extérieur des récipients (8) de sorte que les récipients (8) se tournent lors du passage entre la bande de transport (4) verticale tournante et la bande verticale (6) fixe autour de leur axe vertical et soient comprimés latéralement et les sacs internes se détachent brusquement des récipients extérieurs.
